# EUROPEAN PATENT SPECIFICATION

(11) **EP 4 155 241 B1**
(45) Date of publication and mention of the grant of the patent: **15.10.2025**
(21) Application number: 21808886.2
(22) Date of filing: 01.02.2021
(51) Int. Cl.: B08B 9/20, B65G 19/02, B65G 19/20, B67C 3/22

(54) **PITCH MEASURING MECHANISM**
NEIGUNGSMESSMECHANISMUS
MÉCANISME DE MESURE DE PAS

(30) Priority: 22.05.2020 JP 2020089859; 22.05.2020 JP 2020089860; 22.05.2020 JP 2020089861
(43) Date of publication of application: 29.03.2023
(73) Proprietor: Toyo Seikan Group Engineering Co., Ltd., Yokohama-shi, Kanagawa 230-0001 (JP)
(72) Inventor: TAKAHASHI, Kazuki, Yokohama-shi, Kanagawa 230-0001 (JP); TOKUNAGA, Yasuhiro, Yokohama-shi, Kanagawa 230-0001 (JP); OBATA, Kazumoto, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2021/003449
(87) International publication number: WO 2021/235013

(56) References cited:
- JP-A- H0 672 544
- JP-A- H07 239 229
- JP-A- S5 073 661

## Description

### [Technical Field]

The present invention relates to a chain attachment pitch measurement mechanism used in a container transfer system that transfers containers by pushing the containers with the chain attachments provided to a chain in container filling equipment.

### [Background Art]

Generally, container transfer systems that transfer containers in container filling equipment by pushing the containers with chain attachments provided to a chain are known.

Patent Literature 1, for example, describes a goods sampling apparatus provided with a container transfer system, in which cans transferred from a seaming turret in a can seaming process line to a discharge turret are captured by a pusher chain and conveyed at a constant speed and with a constant pitch on a discharge conveyor to a picking point.

The pusher chain of this goods sampling apparatus described in Patent Literature 1 is passed over a drive sprocket sharing the same rotation axis with the discharge turret that receives cans from the seaming turret, and a driven-side chain sprocket arranged at the picking point.

This pusher chain receives cans between pushers, which are chain attachments formed at predetermined intervals such as to protrude from each of the outer link plates and inner link plates of the pusher chain in a direction perpendicular to the rotation axis of the sprocket, whereby cans are conveyed at a constant speed and with a constant pitch on the discharge conveyor to the picking point.
Patent Literature 2 describes state of the art for the present invention in the form of a can feeding device of can seamer. Further background art for the present invention is described in Patent Literatures 3-4.

### [Citation List]

### [Patent Literature]

[Patent Literature 1] Japanese Patent Application Publication No. H1-285523
[Patent Literature 2] JP H06 72544 A
[Patent Literature 3] JP S50 73661 A
[Patent Literature 4] JP H07 239229 A

### [Summary of Invention]

### [Technical Problem]

The container transfer system that transfers containers by pushing the containers with chain attachments provided to a chain such as the one described in Patent Literature 1 had issues with variation in the pitch of the containers resulting from pitch errors of the chain.

A certain level of variation in the pitch of chain attachments is structurally inevitable (even a new chain has a variation of about ± 0.3 mm per pitch) due to a clearance that is usually provided between pins and bushings of the chain.

The common practice to avoid troubles caused by variation in the pitch of chain attachments is to determine the shortest pitch of chain attachments, and to set the positions of the chain attachments relative to turret pockets with reference to this shortest pitch of chain attachments.

However, there are usually a hundred or more chain attachments, and the measurement that is usually made using a caliper, with the operation shut down, to find the shortest pitch of chain attachments, was time-consuming and cumbersome.

As chain elongation develops, the timing of transfer from chain attachments to turret pockets starts to delay. The delay increases the acceleration of the container being passed to a turret pocket, and may lead to fluid spillage or container damage. Accordingly, position adjustments are necessary to reset the timing when the chain has elongated.

The chain that has elongated not less than a certain level needs to be replaced, since it becomes harder to eliminate instances of fluid spillage or container damage by merely resetting the timing.

To determine the chain elongation for the monitoring of these issues, it was necessary to regularly measure the pitch using a caliper, with the operation shut down similarly to the initial setting, which was time-consuming and cumbersome.

The present invention solves the above problem and aims at providing a simple-structured pitch measurement mechanism that allows measurement of the pitch of chain attachments in an operating condition and facilitates initial pitch setting, monitoring of changes in the pitch of chain attachments due to chain elongation, and pitch resetting.

### [Solution to Problem]

The present invention is defined in the appended claims.
The present invention solves the above problem by providing a chain attachment pitch measurement mechanism used in a container transfer system that includes a chain, a plurality of sprockets the chain is passed over, chain attachments provided to the chain, and a transfer path in which cylindrical containers in upright position are pushed by the chain attachments and transferred along a moving direction of the chain, the pitch measurement mechanism including an attachment detector detecting passage of the chain attachments on the transfer path, and an operation unit measuring a passage time of a chain attachment from a reference time until notification of a detection signal from the attachment detector, and calculating a difference between a preset time and the passage time.

### [Advantageous Effects of Invention]

The pitch measurement mechanism according to claims 1, 6 and 7 includes an attachment detector detecting passage of the chain attachments on the transfer path, and an operation unit capable of measuring a passage time of a chain attachment from a reference time until notification of a detection signal from the attachment detector. Therefore, the passage time of each of the plurality of chain attachments can be measured in an operating condition.

The passage times can be adjusted at the time of initial pitch setting by adjusting the rotation angle of the drive sprocket of the chain, in which a shortest passage time of a chain attachment is set to the shortest tolerable passage time. This way, the pitch setting is possible in an operating condition, without the need to use a caliper or the like.

The passage times may be monitored at all times, which enables monitoring of chain elongation in an operating condition, as well as pitch resetting in an operating condition, similarly to the initial pitch setting.

According to the configuration set forth in claims 1, 6 and 7, the reference time can be determined in an actual operating machine, and when the operating speed is changed, the reference time can be obtained without further adjustments.

According to the configuration set forth in claims 2 and 7, chain elongation can be detected by comparing the passage time with a preset time that is set based on a passage time measured at initial setting of the container transfer system.

According to the configuration set forth in claims 3 and 6, the degree of freedom in structure can be increased, since the attachment detector does not interfere with the containers.

According to the configuration set forth in claim 4, chain elongation of not less than a tolerable level can be detected.

According to the configuration set forth in claims 5 and 7, chain elongation can be detected without the influence of pitch errors of the chain or vibration and the like.

### [Brief Description of Drawings]

[Fig. 1] Fig. 1 is a schematic diagram illustrating one example of container filling equipment S having a container transfer system 100 to which a pitch measurement mechanism according to one embodiment of the present invention is applied.
[Fig. 2] Fig. 2 is a schematic diagram illustrating the vicinity of the container transfer system 100 of Fig. 1.
[Fig. 3] Fig. 3 is a perspective view illustrating the chain 110 of Fig. 1.
[Fig. 4] Fig. 4 is a top plan view illustrating the chain 110 of Fig. 1.
[Fig. 5] Fig. 5 is an A-A' cross section of the chain 110 of Fig. 4.
[Fig. 6] Fig. 6 is a partially exploded schematic diagram illustrating the vicinity of the container transfer system 100 of Fig. 1.
[Fig. 7] Fig. 7 is an enlarged view illustrating the positional relationships between the pitch measurement mechanism, chain 110, and chain attachments 113 according to one embodiment of the present invention.
[Fig. 8] Fig. 8 is an illustrative diagram of chain attachments 113 having a reference hole 121.
[Fig. 9] Fig. 9 is an illustrative diagram of a turret drive system section of a production machine M.

### [Description of Embodiment]

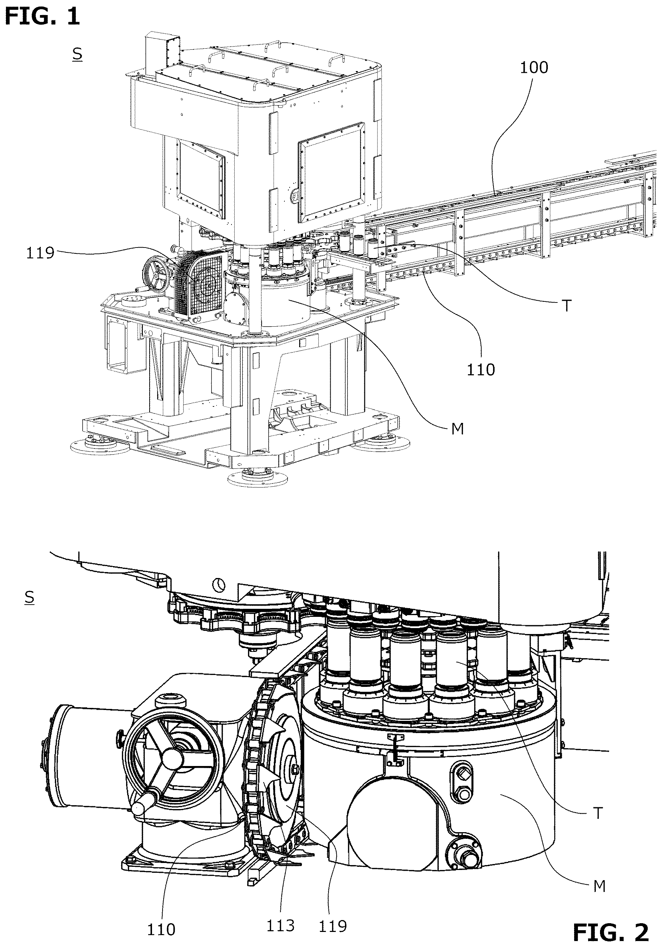

The container transfer system 100 equipped with a pitch measurement mechanism for measuring the pitch of chain attachments according to one embodiment of the present invention conveys containers T in container filling equipment S, and includes, as shown in Fig. 1 and Fig. 2, a chain 110, a drive sprocket 119 and a driven sprocket (not shown) the chain 110 is passed over, and a transfer path (not shown), in which containers T in upright position are pushed by chain attachments 113 provided to the chain 110 and transferred along the moving direction of the chain 110.

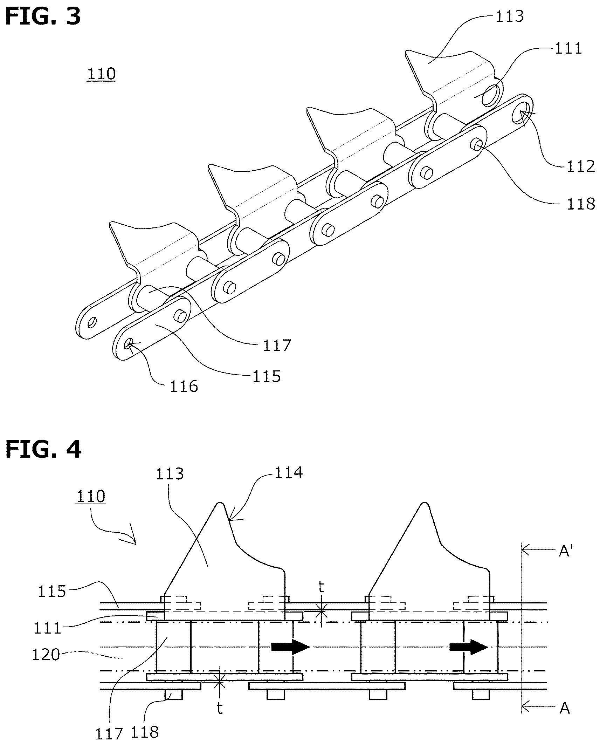

The chain 110 includes, as shown in Fig. 3 to Fig. 5, pairs of left and right inner link plates 111 and pairs of left and right outer link plates 115, the inner link plates 111 having two bushing holes 112 into which bushings 117 are press-fit, and the outer link plates 115 having two pin holes 116 for connecting pins 118 to fit in, and slides on a guide rail 120.

The drive sprocket 119 and driven sprocket have horizontal rotation axes so that the chain 110 is passed over the sprockets vertically.

The pairs of left and right inner link plates 111 are connected together via the bushings 117 press-fit in the bushing holes 112 to stay in the same relative positions. The pairs of left and right outer link plates 115 are connected together by connecting pins 118 rotatably inserted in the bushings 117 and fitted in the pin holes 116 to stay in the same relative positions.

There is provided a predetermined clearance t between the inner link plates 111 and adjacent outer link plates 115. The pairs of left and right inner link plates 111 and pairs of left and right outer link plates 115 are configured to be rotatable relative to each other by relative rotation between the bushings 117 and the connecting pins 118.

Chain attachments 113 protruding toward the transfer path are formed on top of the inner link plates 111 on one of the left and right sides facing the transfer path.

The chain attachment 113 has a contact edge 114 that makes contact with a container T being transferred on the transfer path to push it along the conveying direction. The contact edge 114 is configured to touch the container T being transferred on the transfer path in upright position at a point closer to the chain 110 than the widthwise center of the container, and such that the nearer to the chain 110, the more inclined toward the moving direction of the chain 110.

A transfer guide (not shown) is provided on one side of the transfer path opposite from the chain 110 to prevent the containers T from falling off from the transfer path.

The chain is guided on the path, with the bushings 117 making sliding contact with the upper surface of the guide rail 120 and inner sides of the pairs of left and right inner link plates 111 making sliding contact with the side faces of the guide rail.

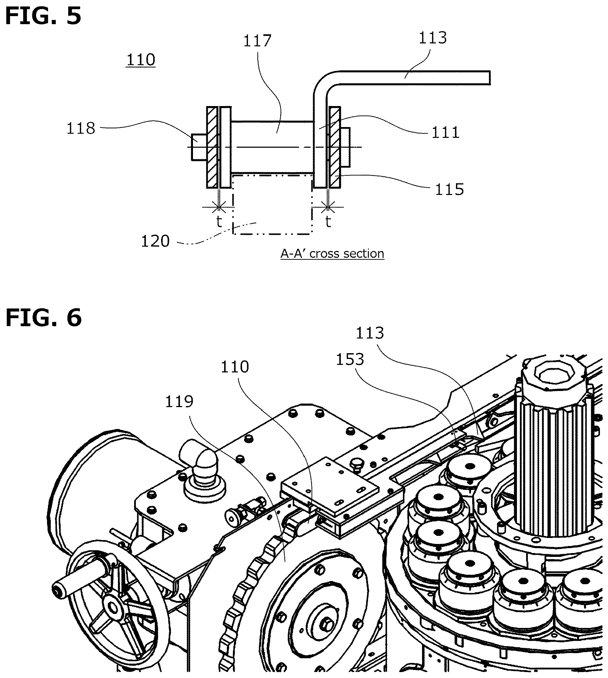

The configuration and operation of the pitch measurement mechanism that is one embodiment of the present invention are described next with reference to Fig. 6 to Fig. 9.

Containers T are conveyed linearly by the chain attachments 113 of the container transfer system 100 and transferred to each of the pockets of a circularly moving turret of a production machine M.

The chain 110 moves in sync with the production machine M and the system is configured such that the containers T being conveyed by the chain attachments 113 reach and pass the transfer point where the containers move over from the transfer path onto the production machine M at a constant timing and are transferred smoothly to turret pockets of the production machine M.

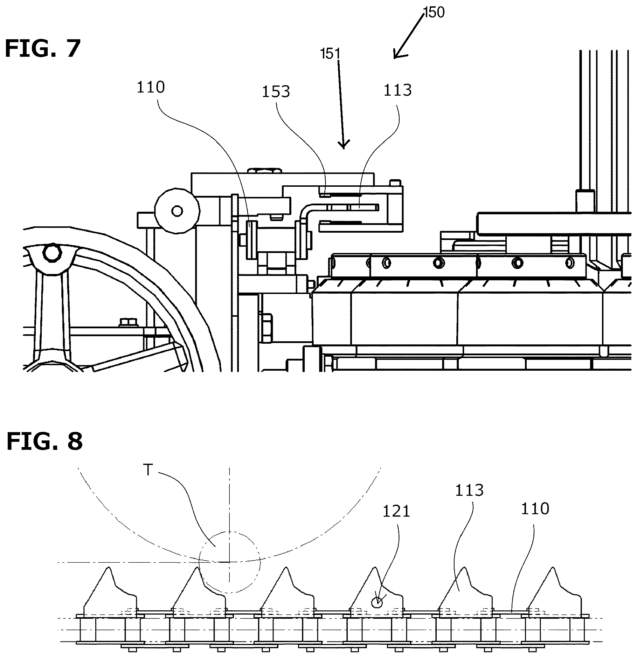

As shown in Fig. 6 and Fig. 7, an optoelectronic sensor 153 that is an attachment detector is disposed downstream of the transfer point, and configured to output an on/off signal as passing chain attachments 113 block light.

As shown in Fig. 8, a reference hole 121 is provided to only one of all the chain attachments 113. By detecting the reference hole 121 from the on/off signal from the optoelectronic sensor 153, it is possible to determine which chain attachment 113 the one that has just passed is, counting from the chain attachment 113 having the reference hole 121 (attachment No. 1).

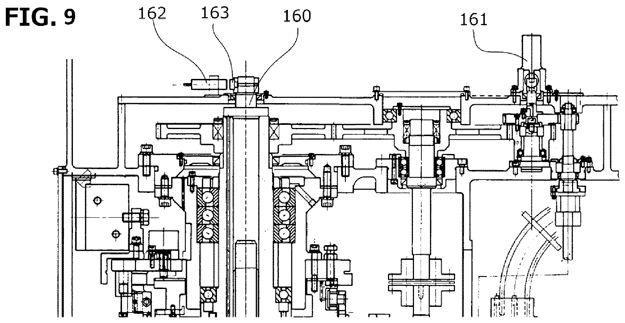

The turret of the production machine M to which containers T are transferred from the container transfer system 100 is provided with an encoder 161 at a suitable location in the power transmission system as shown in Fig. 9. A dog 163 is provided to the turret shaft 160, and a proximity sensor 162 is provided to detect passage of the dog 163.

The power transmission system of the turret is configured with gears and the like. Since timing variation is negligible in actual operation, the signal from the encoder 161 can be treated as the reference signal indicating passage of each pocket of the turret through the transfer point. By detecting the dog 163 on the turret shaft 160, it is possible to determine which pocket on the turret is passing the transfer point.

The pitch measurement mechanism is electrically coupled to a suitable point, and includes an operation unit (not shown) that performs signal processing, relational operations, and so on.

The operation unit may be independently provided, or, a control device of other equipment may be provided with that function.

While measurement is possible in an actual operating condition, the system is operated at a speed reduced from that during normal production (e.g., preferably, 150 cans/min or lower, or at a chain running speed of 15 m/min or lower) for initial setting in this embodiment so as to minimize measurement errors caused by vibration. When the speed has become constant, the passage time of each pocket is determined from the signal from the encoder 161 with reference to the signal indicative of the position of the specific pocket on the turret mentioned above (position No. 1), and using this as the reference, the passage time of each chain attachment from the reference time until the reception of a detection signal of each chain attachment by the optoelectronic sensor 153 is measured.

The relationship between the rotation angles of the turret and the sprockets are then set, on the basis of a shortest passage time of a chain attachment as an optimal value.

Chain elongation afterwards can be monitored similarly to the initial setting, i.e., the passage time of each pocket is determined from the signal from the encoder 161 with reference to the signal indicative of the position of the specific pocket on the turret (position No. 1), and using this as the reference, the passage time of each chain attachment from the reference time until the reception of a detection signal of each chain attachment by the optoelectronic sensor 153 is measured.

The chain may be monitored throughout normal production, or at predetermined intervals.

The operating speed may be reduced from the normal production speed for making measurements only during monitoring, similarly to the initial setting operation.

If the measurement results show that the passage time has increased, the relationship between the rotation angles of the turret and the sprockets are set again, with the shortest passage time of a chain attachment used as an optimal value.

If the chain attachment with the shortest passage time is different from that at the time of initial setting, the pitch settings may be renewed based on this passage time.

The transfer timing can be optimized by renewing the pitch settings as described above irrespective of pitch elongation. A pitch increase, however, of not less than a predetermined level (1 mm or more from the time of initial setting in this embodiment) can lead to spillage or container damage because of increased variation in the pitch of the chain attachments.

The point where containers are received from another upstream transfer system is spaced away by several pitches from the transfer point. The total elongation of several pitches will result in a larger difference in timing, and therefore a pitch increase of not less than a predetermined level (1 mm or more from the time of initial setting in this embodiment) may amount to a value more than a tolerable level at the receiving point.

Since the passage times of the chain attachments are proportional to chain elongation, the actual pitch increase of chain attachments can be calculated from the rotation angles of the turret and the sprockets and the passage times.

When a chain attachment with a pitch increase of not less than a predetermined level (1 mm or more from the time of initial setting in this embodiment) is found, it can be determined that the chain is at the end of its service life.

Taking account of measurement deviations caused by vibration or widthwise displacement, in this embodiment, the chain is to be replaced when the number of chain attachments with a pitch increase of not less than a predetermined level (1 mm or more from the time of initial setting in this embodiment) has reached 10.

While one embodiment of the present invention has been described above in detail, the present invention is not limited to the embodiment described above. Various design changes may be made without departing from the scope of the claims set forth in the claims.

While the reference time is determined from signals from the encoder 161 in the embodiment described above, reference time may be determined from other signals, such as signals obtained by directly detecting each pocket on the turret.

The chain attachment was described as being integrally formed with the inner link plates on the side facing the transfer path. The configuration of the chain attachments is not limited to this. For example, the chain attachments may be formed separately from the inner link plates, or, may be connected to both of the pairs of left and right inner link plates, or may be integrally formed with or connected to other parts of the chain such as outer link plates or pins.

### [Reference Signs List]

- 100: Container transfer system
- 110: Chain
- 111: Inner link plate
- 112: Bushing hole
- 113: Chain attachment
- 114: Contact edge
- 115: Outer link plate
- 116: Pin hole
- 117: Bushing
- 118: Connecting pin
- 119: Drive sprocket
- 120: Guide rail
- 121: Reference hole
- 150: Pitch measurement mechanism
- 151: Attachment detector
- 153: Optoelectronic sensor
- 160: Turret shaft
- 161: Encoder
- 162: Proximity sensor
- 163: Dog
- M: Production machine
- S: Container filling equipment
- T: Container

## Claims

1. A pitch measurement mechanism (150) for measuring a pitch of chain attachments (113) in a container transfer system (100) that includes a chain (110), a plurality of sprockets the chain (110) is passed over, chain attachments (113) provided to the chain (110), and a transfer path in which cylindrical containers in upright position are pushed by the chain attachments (113) and transferred along a moving direction of the chain (110),
the pitch measurement mechanism (150) comprising an attachment detector (151) detecting passage of the chain attachments (113) on the transfer path, and an operation unit capable of measuring a passage time of a chain attachment (113) from a reference time until notification of a detection signal from the attachment detector (151),
and wherein the reference time is based on a signal output from a downstream transfer system to which the container transfer system (100) transfers the containers.

2. The pitch measurement mechanism (150) according to claim 1, wherein the operation unit compares the passage time with a preset time that is set based on a passage time measured at initial setting of the container transfer system (100).

3. The pitch measurement mechanism (150) according to any one of claims 1 to 2, wherein the attachment detector (151) is disposed downstream of a point at which containers are transferred to a downstream transfer system.

4. The pitch measurement mechanism (150) according to claim 2 or 3, wherein the operation unit determines that the chain (110) has elongated when a difference between the preset time and the passage time exceeds a predetermined value.

5. The pitch measurement mechanism (150) according to claim 2 or 3, wherein the operation unit determines that the chain (110) has elongated when more than a predetermined number of chain attachments (113) have a larger average value of a difference between the preset time and the passage time than a predetermined value.

6. A pitch measurement mechanism (150) for measuring a pitch of chain attachments (113) in a container transfer system (100) that includes a chain (110), a plurality of sprockets the chain (110) is passed over, chain attachments (113) provided to the chain (110), and a transfer path in which cylindrical containers in upright position are pushed by the chain attachments (113) and transferred along a moving direction of the chain (110),
the pitch measurement mechanism (150) comprising an attachment detector (151) detecting passage of the chain attachments (113) on the transfer path, and an operation unit capable of measuring a passage time of a chain attachment (113) from a reference time until notification of a detection signal from the attachment detector (151),
and wherein the attachment detector (151) is disposed downstream of a point at which containers are transferred to a downstream transfer system.

7. A pitch measurement mechanism (150) for measuring a pitch of chain attachments (113) in a container transfer system (100) that includes a chain (110), a plurality of sprockets the chain (110) is passed over, chain attachments (113) provided to the chain (110), and a transfer path in which cylindrical containers in upright position are pushed by the chain attachments (113) and transferred along a moving direction of the chain (110),
the pitch measurement mechanism (150) comprising an attachment detector (151) detecting passage of the chain attachments (113) on the transfer path, and an operation unit capable of measuring a passage time of a chain attachment (113) from a reference time until notification of a detection signal from the attachment detector (151),
wherein the operation unit compares the passage time with a preset time that is set based on a passage time measured at initial setting of the container transfer system (100),
and the operation unit determines that the chain (110) has elongated when more than a predetermined number of chain attachments (113) have a larger average value of a difference between the preset time and the passage time than a predetermined value.

## Patentansprüche

1. Neigungsmessmechanismus (150) zum Messen einer Neigung von Kettenansätzen (113) in einem Behältertransfersystem (100), das eine Kette (110), mehrere Kettenräder, über welche die Kette (110) läuft, an der Kette (110) vorgesehene Kettenansätze (113), und einem Transferweg aufweist, auf welchem zylindrische Behälter in aufrechten Positionen mittels der Kettenansätze (113) geschoben und entlang einer Bewegungsrichtung der Kette (110) transferiert werden,
wobei der Neigungsmessmechanismus (150) einen Ansatzdetektor (151), der das Passieren der Kettenansätze (113) auf dem Transferweg erkannt, und eine Betriebseinheit aufweist, die in der Lage ist, eine Durchlaufzeit eines Kettenansatzes (113) von einer Referenzzeit bis zu einer Anzeige eines Erkennungssignals von dem Ansatzdetektor (151) zu messen,
und wobei die Referenzzeit auf einem Signalausgang eines stromabwärtigen Transfersystem basiert, an welches das Behältertransfersystem (100) die Behälter übergibt.

2. Neigungsmessmechanismus (150) nach Anspruch 1, bei welchem die Betriebseinheit die Durchlaufzeit mit einer voreingestellten Zeit vergleicht, die basierend auf einer Durchlaufzeit eingestellt ist, welche mit den Ausgangseinstellungen des Transfersystems (100) gemessen wurde.

3. Neigungsmessmechanismus (150) nach einem der Ansprüche 1 bis 2, bei welchem der Ansatzdetektor (151) stromabwärts eines Punkts angeordnet ist, an welchem Behälter an ein stromabwärtiges Transfersystem übergeben werden.

4. Neigungsmessmechanismus (150) nach Anspruch 2 oder 3, bei welchem die Betriebseinheit feststellt, dass die Kette (110) sich gelängt hat, wenn eine Differenz zwischen der voreingestellten Zeit und der Durchlaufzeit einen vorbestimmten Wert übersteigt.

5. Neigungsmessungsmechanismus (150) nach Anspruch 2 oder 3, bei welchem die Betriebseinheit feststellt, dass sich die Kette (110) gelängt hat, wenn mehr als eine vorbestimmte Anzahl von Kettenansätzen (113) einen Durchschnittswert einer Differenz zwischen der voreingestellten Zeit und der Durchlaufzeit aufweisen, der größer als ein vorbestimmter Wert ist.

6. Neigungsmessmechanismus (150) zum Messen einer Neigung von Kettenansätzen (113) in einem Behältertransfersystem (100), das eine Kette (110), mehrere Kettenräder, über welche die Kette (110) läuft, an der Kette (110) vorgesehene Kettenansätze (113), und einem Transferweg aufweist, auf welchem zylindrische Behälter in aufrechten Positionen mittels der Kettenansätze (113) geschoben und entlang einer Bewegungsrichtung der Kette (110) transferiert werden,
wobei der Neigungsmessmechanismus (150) einen Ansatzdetektor (151), der das Passieren der Kettenansätze (113) auf dem Transferweg erkannt, und eine Betriebseinheit aufweist, die in der Lage ist, eine Durchlaufzeit eines Kettenansatzes (113) von einer Referenzzeit bis zu einer Anzeige eines Erkennungssignals von dem Ansatzdetektor (151) zu messen,
und wobei der Ansatzdetektor (151) stromabwärts eines Punkts angeordnet ist, an welchem Behälter an ein stromabwärtiges Transfersystem übergeben werden.

7. Neigungsmessmechanismus (150) zum Messen einer Neigung von Kettenansätzen (113) in einem Behältertransfersystem (100), das eine Kette (110), mehrere Kettenräder, über welche die Kette (110) läuft, an der Kette (110) vorgesehene Kettenansätze (113), und einem Transferweg aufweist, auf welchem zylindrische Behälter in aufrechten Positionen mittels der Kettenansätze (113) geschoben und entlang einer Bewegungsrichtung der Kette (110) transferiert werden,
wobei der Neigungsmessmechanismus (150) einen Ansatzdetektor (151), der das Passieren der Kettenansätze (113) auf dem Transferweg erkannt, und eine Betriebseinheit aufweist, die in der Lage ist, eine Durchlaufzeit eines Kettenansatzes (113) von einer Referenzzeit bis zu einer Anzeige eines Erkennungssignals von dem Ansatzdetektor (151) zu messen, wobei die Betriebseinheit die Durchlaufzeit mit einer voreingestellten Zeit vergleicht, die basierend auf einer Durchlaufzeit eingestellt ist, welche mit den Ausgangseinstellungen des Transfersystems (100) gemessen wurde, und die Betriebseinheit feststellt, dass sich die Kette (110) gelängt hat, wenn mehr als eine vorbestimmte Anzahl von Kettenansätzen (113) einen Durchschnittswert einer Differenz zwischen der voreingestellten Zeit und der Durchlaufzeit aufweisen, der größer als ein vorbestimmter Wert ist.

## Revendications

1. Mécanisme de mesure de pas (150) pour mesurer un pas de fixations de chaîne (113) dans un système de transfert de conteneur (100) qui inclut une chaîne (110), une pluralité de pignons sur lesquels la chaîne (110) est amenée à passer, des fixations de chaîne (113) prévues sur la chaîne (110), et un trajet de transfert dans lequel des conteneurs cylindriques en position verticale sont poussés par les fixations de chaîne (113) et transférés le long d'une direction de déplacement de la chaîne (110),
le mécanisme de mesure de pas (150) comprenant un détecteur de fixation (151) détectant le passage des fixations de chaîne (113) sur le trajet de transfert, et une unité de fonctionnement capable de mesurer un temps de passage d'une fixation de chaîne (113) à partir d'un temps de référence jusqu'à la notification d'un signal de détection provenant du détecteur de fixation (151), et dans lequel
le temps de référence est basé sur un signal en sortie d'un système de transfert en aval vers lequel le système de transfert de conteneur (100) transfère les conteneurs.

2. Mécanisme de mesure de pas (150) selon la revendication 1, dans lequel l'unité de fonctionnement compare le temps de passage à un temps prédéfini qui est défini sur la base d'un temps de passage mesuré au réglage initial du système de transfert de conteneur (100).

3. Mécanisme de mesure de pas (150) selon l'une quelconque des revendications 1 à 2, dans lequel le détecteur de fixation (151) est disposé en aval d'un point au niveau duquel des conteneurs sont transférés vers un système de transfert en aval.

4. Mécanisme de mesure de pas (150) selon la revendication 2 ou 3, dans lequel l'unité de fonctionnement détermine que la chaîne (110) s'est allongée lorsqu'une différence entre le temps prédéfini et le temps de passage dépasse une valeur prédéterminée.

5. Mécanisme de mesure de pas (150) selon la revendication 2 ou 3, dans lequel l'unité de fonctionnement détermine que la chaîne (110) s'est allongée lorsque plus d'un nombre prédéterminé de fixations de chaîne (113) présentent une valeur moyenne plus grande d'une différence entre le temps prédéfini et le temps de passage qu'une valeur prédéterminée.

6. Mécanisme de mesure de pas (150) pour mesurer un pas de fixations de chaîne (113) dans un système de transfert de conteneur (100) qui inclut une chaîne (110), une pluralité de pignons sur lesquels la chaîne (110) est amenée à passer, des fixations de chaîne (113) prévues sur la chaîne (110), et un trajet de transfert dans lequel des conteneurs cylindriques en position verticale sont poussés par les fixations de chaîne (113) et transférés le long d'une direction de déplacement de la chaîne (110),
le mécanisme de mesure de pas (150) comprenant un détecteur de fixation (151) détectant le passage des fixations de chaîne (113) sur le trajet de transfert, et une unité de fonctionnement capable de mesurer un temps de passage d'une fixation de chaîne (113) à partir d'un temps de référence jusqu'à la notification d'un signal de détection provenant du détecteur de fixation (151), et dans lequel
le détecteur de fixation (151) est disposé en aval d'un point auquel les conteneurs sont transférés vers un système de transfert en aval.

7. Mécanisme de mesure de pas (150) pour mesurer un pas de fixations de chaîne (113) dans un système de transfert de conteneur (100) qui inclut une chaîne (110), une pluralité de pignons sur lesquels la chaîne (110) est amenée à passer, des fixations de chaîne (113) prévues sur la chaîne (110), et un trajet de transfert dans lequel des conteneurs cylindriques en position verticale sont poussés par les fixations de chaîne (113) et transférés le long d'une direction de déplacement de la chaîne (110),
le mécanisme de mesure de pas (150) comprenant un détecteur de fixation (151) détectant le passage des fixations de chaîne (113) sur le trajet de transfert, et une unité de fonctionnement capable de mesurer un temps de passage d'une fixation de chaîne (113) à partir d'un temps de référence jusqu'à la notification d'un signal de détection provenant du détecteur de fixation (151),
dans lequel l'unité de fonctionnement compare le temps de passage à un temps prédéfini qui est défini sur la base d'un temps de passage mesuré au réglage initial du système de transfert de conteneur (100), et
l'unité de fonctionnement détermine que la chaîne (110) s'est allongée lorsque plus d'un nombre prédéterminé de fixations de chaîne (113) présentent une valeur moyenne de différence entre le temps prédéfini et le temps de passage supérieure à une valeur prédéterminée.
